# EUROPEAN PATENT SPECIFICATION

(11) **EP 3 450 873 B1**
(45) Date of publication and mention of the grant of the patent: **25.12.2024**
(21) Application number: 17189048.6
(22) Date of filing: 01.09.2017
(51) Int. Cl.: F24F 13/20, F24F 12/00

(54) **AIR SUPPLY DEVICE**
LUFTZUFUHRVORRICHTUNG
DISPOSITIF D'ADMISSION D'AIR

(43) Date of publication of application: 06.03.2019
(73) Proprietor: Enervent Zehnder Oy, 06150 Porvoo (FI)
(72) Inventor: Tuutti, Jari, 07500 Askola (FI); Lalu, Tero, 06100 Porvoo (FI); Palmgren, Tom, 06200 Porvoo (FI)
(74) Representative: Papula Oy

(56) References cited:
- EP-A1- 2 053 317
- EP-A2- 2 314 937
- WO-A1-2005/026624
- WO-A1-2009/106854
- FR-A1- 2 533 682

## Description

### TECHNICAL FIELD

The application introduces an air supply device for extracting exhaust air from a room and leading fresh supply air into the room.

### BACKGROUND

Air supply devices are designed for and assembled into buildings which have exhaust air ducts, for removing exhaust air out of the building, and supply air ducts, for conducting fresh supply air into the building, in certain order. Previously this order is needed to know before a supply air device has been ordered or bought. The order of the ducts inside the building is important for the air supply device because the air supply device may comprise different kind of heat exchangers and filters inside its air channels. Therefore, it is important to connect right duct of the building to the right inlet of the air supply device. Known air supply devices are disclosed for example in documents FR 2533682 A1 and WO 2009/106854 A1.

### OBJECTIVE

The objective of the present invention is to provide an air supply device which may be connected to different kinds of duct systems of buildings without knowing the order of the ducts beforehand.

### SUMMARY

According to a first aspect, the present invention provides an air supply device according to claim 1.

In an embodiment of the device, the air supply device comprises an exhaust air channel and a supply air channel arranged inside the body.

In an embodiment of the device, the frame comprises an exhaust air inlet and an exhaust air outlet connected to the exhaust air channel, and a supply air inlet and a supply air outlet connected to the supply air channel. The order of the inlets and outlets may differ in some embodiments.

In an embodiment of the device, the exhaust air inlet, the exhaust air outlet, and the supply air inlet and the supply air outlet are facing upwards.

In an embodiment of the device, the exhaust air inlet, the exhaust air outlet, and the supply air inlet and the supply air outlet extend through the casing.

In an embodiment of the device, the internal part comprises a first half and a second half arranged side by side in horizontal plane, wherein the first half is connected to the supply air outlet and the exhaust air inlet, and the second half is connected to the supply air inlet and the exhaust air outlet. By rotating the internal part 180° in horizontal plane, the first half and the second half change places inside the frame. Because of the rotation, the order of the corresponding inlets and outlets in the frame changes also.

In an embodiment of the device, the cooker hood air channel comprises a cooker hood air opening.

In an embodiment of the device, the cooker hood air channel is arranged between the first half and the second half.

In an embodiment of the device, the cooker hood channel is connected to the exhaust air channel.

In an embodiment of the device, the cooker hood air channel comprises removable lid.

In an embodiment of the device, the removable lid is arranged to be installed in the same position regardless the position of the internal part.

In an embodiment of the device, in the first position the cooker hood air inlet is between the supply air inlet and the supply air outlet, and in the second position the cooker hood air inlet is between the exhaust air inlet and the exhaust air outlet. The internal part may be first rotated in the first position or in the second position and then the removable lid is put in place to cover the cooker hood air channel. This way the cooker hood air inlet may be always in same location in the air supply device.

In an embodiment of the device, the air supply device comprises at least one heat exchanger arranged inside the exhaust air channel or the supply air channel. The heat exchanger may be used for heating or cooling the air flowing inside supply air channel or the exhaust air channel.

In an embodiment of the device, the air supply device comprises heat exchangers arranged inside the exhaust air channel and the supply air channel.

In an embodiment of the device, the air supply device comprises a supply air fan inside the supply air channel. The supply air fan may be used for boosting the supply air flow inside the supply air channel.

In an embodiment of the device, the air supply device comprises an exhaust air fan inside the exhaust air channel. The exhaust air fan may be used for boosting the exhaust air flow inside the exhaust air channel.

In an embodiment of the invention, the frame and the internal part are made of the same elastic material as the body.

In an embodiment of the device, the elastic material is expanded polypropylene (EPP). EPP has good thermal insulation properties and its elasticity is suitable for squeezing parts made of EPP together. It is also light material and, therefore, the weight of the body parts is lower than in air supply devices with metal parts. The elastic material of the body may also be expanded polystyrene (EPS) but EPP is more elastic and less brittle.

In an embodiment of the device, a heat transfer unit is arranged inside the lower part of the body, and within the exhaust air channel and the supply air channel to transfer thermal energy between exhaust air flowing in the exhaust air channel, and supply air flowing in the supply air channel. By such arrangement the heat transfer unit may be fixed or replaced by removing the lower part only from the air supply device. Also the heat transfer unit may be installed inside the lower part before the lower part is brought to the installation plant.

In an embodiment of the device, the heat transfer unit comprises a rotating heat transfer element.

Various aspects and embodiments of the air supply device described above may be used in any combination with each other.

### BRIEF DESCRIPTION OF THE DRAWINGS

The accompanying drawings, which are included to provide a further understanding of the air supply device and which constitute a part of this specification, illustrate embodiments of the air supply device and together with the description help to explain the principles of the invention. In the drawings:
**Fig. 1** shows an exploded view of an air supply device according to a first embodiment,
**Fig. 2** shows an exploded view of an upper part of the air supply device according to a first embodiment, and
**Fig. 3** shows a detailed view of the air supply device from above wherein the internal part is installed in a first position, and
**Fig. 4** shows a detailed view of the air supply device from above wherein the internal part is installed in a second position.

### DETAILED DESCRIPTION OF THE INVENTION

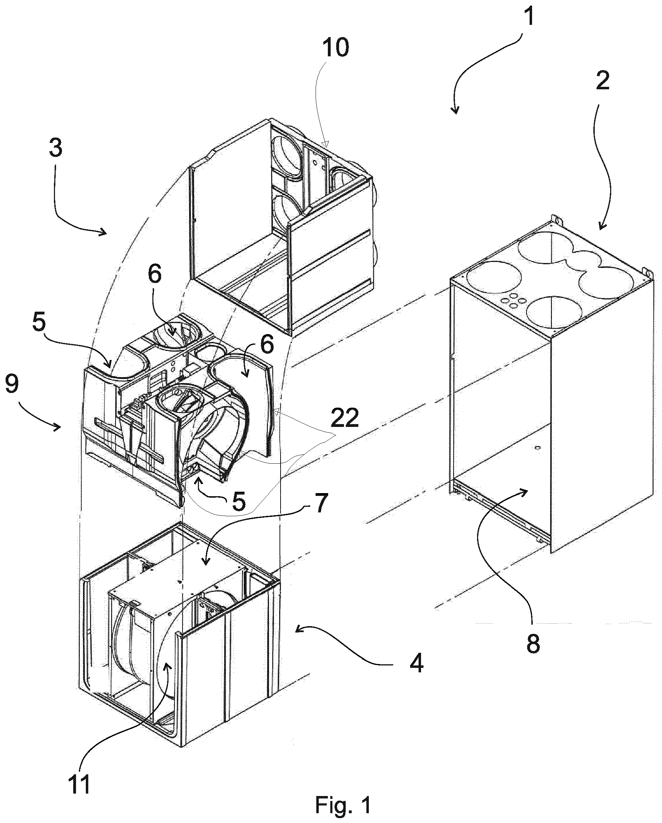

Figure 1 shows an air supply device 1 having components ready to be assembled together. The air supply unit comprises a casing 2 further comprising a separate bottom sheet 8. Inside the casing 2, the air supply device 1 comprises a body which comprises two parts, an upper part 3 and a lower part 4 where the body and thus both of the upper part 3 and the lower part 4 are made of elastic material. The body further comprises an exhaust air channel 5 and a supply air channel 6. The exhaust air channel 5 is arranged to receive exhaust air from a room into the air supply device and conduct the exhaust air out of the air supply device and further out of the building, and the supply air channel is arranged to receive fresh supply air into the air supply device and conduct the supply air further out of the air supply device into the room. The exhaust air channel 5 and the supply air channel 6 run inside the air supply device 1 in parallel and forms a shape of U so that the each exhaust air channel 5 and the supply air channel 6 comprise two vertical portions and a horizontal portion between the vertical portions. The exhaust air and the supply air inside the respective channels flow in opposite directions.

The upper part 3 comprises a frame 10 and an internal part 9, which internal part 9 is arranged to be installed inside the frame 10. In figure 1 the internal part 9 is in first position and ready to be installed inside the frame 10. However, it is possible to rotate the internal part 9 180° in horizontal plane before installing it inside the frame 10. This rotated position is a second position in which the internal part is possible to be installed inside the frame 10.

According to one embodiment, the lower part 4 comprises a heat transfer unit 7 as illustrated in figure 1.

According to one embodiment, the heat transfer unit 7 comprises a rotating heat transfer element 11. In figure 1 the rotating heat transfer element 11 is arranged to rotate in vertical position around a horizontal axis, and to transfer thermal energy from one air flow into the other.

According to one embodiment, the rotating heat transfer element 11 is arranged to rotate in horizontal position around a vertical axis and to transfer thermal energy from one air flow into the other.

According to one embodiment, the heat transfer unit 7 is arranged within the horizontal portions of the exhaust air channel 5 and the supply air channel 6.

As illustrated in figure 1, the upper part 3 (with all the components inside) is installed on top of the lower part 4. Thereafter the body with the upper and lower part on top of each other is installed inside the casing 2 e.g. by sliding the body into the casing 2 through a front door opening of the casing 2. Alternatively the lower part 4 is slid into the casing 2 first and the upper part 3 is thereafter carefully slid onto the lower part 4.

According to one embodiment, the inner part 9 is made of the same elastic material as the body. The inner part 9 forms the exhaust air channel 5 and the supply air channel 6 inside the upper part.

According to one embodiment, the frame 10 is made of the same elastic material as the body.

According to one embodiment, the inner part 9 comprises vertical sealing surfaces 22 which seal the inner part 9 against side walls of the upper part 3. The vertical sealing surfaces 22 may comprise seals e.g. weather stripes.

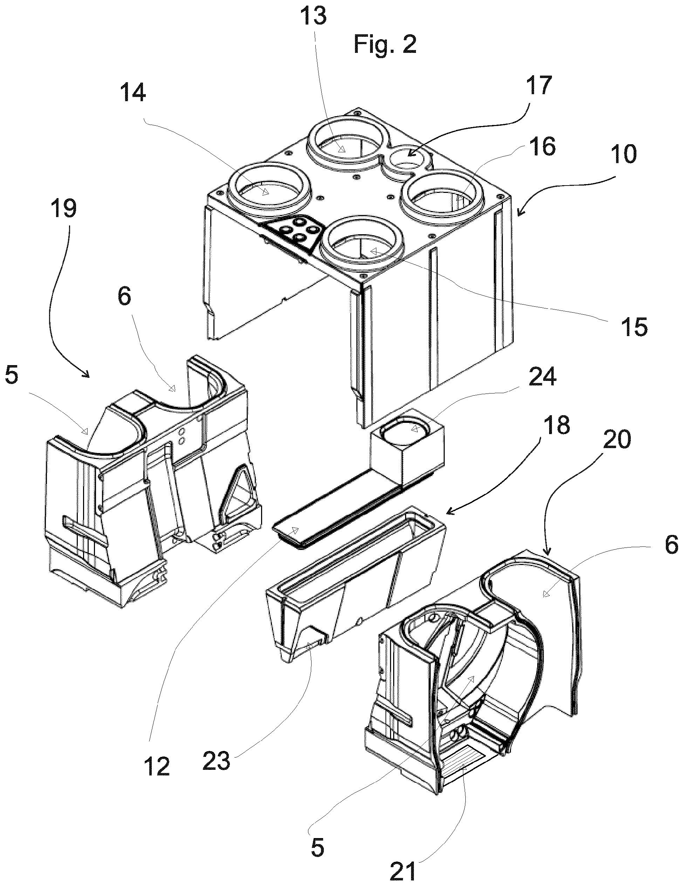

Figure 2 shows an exploded view of the upper part 3 of the air supply device 1 according to one embodiment. The exhaust air channel 5 comprises an exhaust air inlet 14 and an exhaust air outlet 15, and the supply air channel 6 comprises a supply air inlet 16 and a supply air outlet 13.

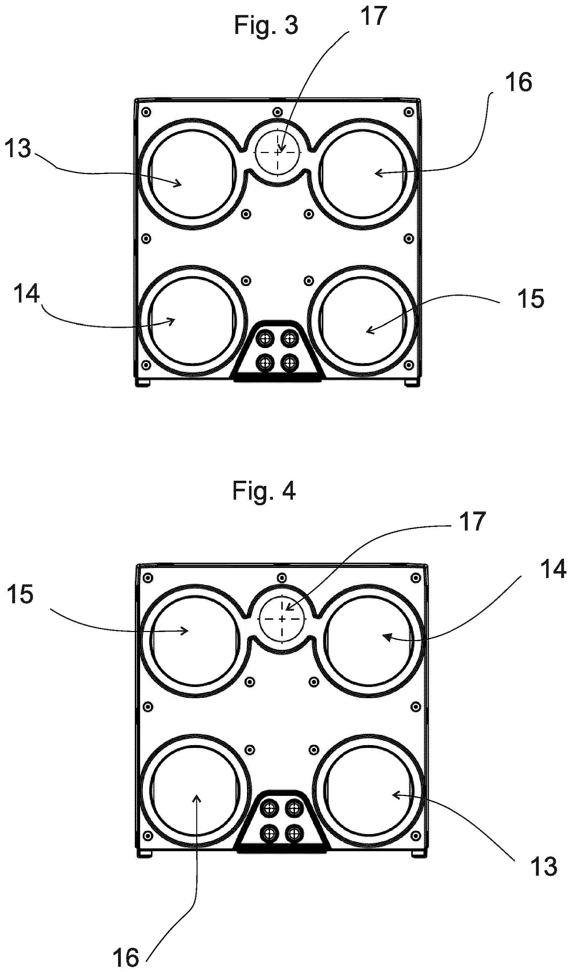

According to one embodiment, the internal part 9 comprises a first half 19 and a second half 20 which are arranged side by side in horizontal plane. The first half 19 and the second half 20 may be connected together by squeezing them against each other or they may be connected by using glue or some adhesive compound. The supply air outlet 13 and the exhaust air inlet 14 are located in the first half 19, and the supply air inlet 16 and the exhaust air outlet 15 are located second half 20. If the internal part 9 is rotated 180° in horizontal plane, the position of the inlets and outlets changes as illustrated in figures 3 and 4 later.

The exhaust air channel 5 and the supply air channel 6 may have larger chambers near the outlets or inlets. These chambers may comprise an air fan or fans for accelerating the air flows inside the air channels. It is possible that only one air channel exhaust air channel 5 or the supply air channel 6 comprise said air fan.

According to one embodiment, the internal part 9 comprises a cooker hood air channel 18 arranged inside the frame 10. Buildings may have a separate cooker hood air duct for removing cooker hood air out of the rooms and further out of the building.

According to one embodiment, the cooker hood air channel 18 is a separate component which may be installed to the air supply device 1.

According to one embodiment, the cooker hood air channel 18 comprises a cooker hood air opening 24. The cooker hood air opening 24 is connected to the cooker hood air inlet 17, which is further connected to the cooker hood air duct of the building. The cooker hood air is extracted from the building into the air supply device 1 through the cooker hood air inlet 17.

According to one embodiment, the cooker hood air channel 18 is arranged between the first half 19 and the second half 20. The cooker hood air channel 18 may be connected to the first half 19 and the second half 20 by squeezing it between the first half 19 and the second half 20 or it may be glued or connected by some adhesive compound.

According to one embodiment, the cooker hood channel 18 is connected to the exhaust air channel 5. The cooker hood channel 18 comprises an opening 23, through which the cooker hood air is conducted from the cooker hood air channel 18 into the exhaust air channel 5, which comprises another opening in the corresponding location. The extracted cooker hood air is further conducted into the exhaust air channel 5 and further outside of the building.

According to one embodiment, the cooker hood air channel 18 comprises removable lid 12 having a cooker hood air opening 24 connected to the cooker hood air inlet 17. The cooker hood air opening 24 is arranged at one end of the removable lid 12.

According to one embodiment, the removable lid 12 comprises electrical components which are used to operate the air supply device 1. The electrical components are arranged on top of the removable lid and at the opposite end than the cooker hood air opening 24.

According to one embodiment, the removable lid 12 is arranged to be installed in the same position regardless the position of the internal part 9. Therefore, the electrical components and the cooker hood air opening 24 are always in the same location inside the air supply device 1.

According to one embodiment, in the first position the cooker hood air inlet 17 is between the supply air inlet 16 and the supply air outlet 13, and in the second position the cooker hood air inlet 17 is between the exhaust air inlet 14 and the exhaust air outlet 15.

According to one embodiment, the air supply device comprises at least one heat exchanger 21 arranged inside the exhaust air channel 5 or the supply air channel 6. The heat exchanger may be used for heating or cooling the air flow inside the air channel.

According to one embodiment, the air supply device comprises heat exchangers 21 arranged inside the exhaust air channel 5 and the supply air channel 6.

According to one embodiment, the elastic material is expanded polypropylene (EPP).

Figure 3 shows a detailed view of the air supply device 1 from above wherein the internal part 9 is installed in a first position. As seen in figure 3, when the internal part 9 is installed in the first position, the supply air inlet 16 is located in the top right corner and the supply air outlet 13 is located in the top left corner. The exhaust air inlet 14 is located in the bottom left corner and the exhaust air outlet 15 is located in the bottom right corner. However, the supply air inlet 16 and the supply air outlet 13 may change places, and at the same time, the exhaust air inlet 14 and the exhaust air outlet 15 change places also.

Figure 4 shows a detailed view of the air supply device from above wherein the internal part is installed in a second position. As seen in figure 4, when the internal part 9 is installed in the second position, the supply air inlet 16 is located in the bottom left corner and the supply air outlet 13 is located in the bottom right corner. The exhaust air inlet 14 is located in the top right corner and the exhaust air outlet 15 is located in the top left corner. However, the supply air inlet 16 and the supply air outlet 13 may change places, and at the same time, the exhaust air inlet 14 and the exhaust air outlet 15 change places also.

As illustrated in figures 3 and 4, the cooker hood air inlet 17 is always located in the same place. However, it is possible that the air supply device 1 does not comprise the cooker hood air inlet 17 at all.

## Claims

1. An air supply device (1) for extracting exhaust air from a room and leading fresh supply air into the room comprising
- a casing (2), forming an outer layer of the air supply device (1), and
- a body, made of elastic material, arranged inside the casing (2), wherein
- the body is divided in at least an upper part (3) and a lower part (4) which are arranged on top of each other,
- the upper part (3) comprises an internal part (9) and a frame (10), wherein the internal part (9) is arranged inside the frame (10), and
- the internal part (9) is arranged to be installed inside the frame (10) in a first position or in a second position, wherein in the second position the internal part (9) has been rotated 180° in horizontal plane compared to the first position,
the internal part (9) comprises a cooker hood air channel (18) arranged inside the frame (10).

2. An air supply device according to claim 1,
**characterized in that** the air supply device (1) comprises an exhaust air channel (5) and a supply air channel (6) arranged inside the body.

3. An air supply device according to claim 2,
**characterized in that** the frame (10) comprises
- an exhaust air inlet (14) and an exhaust air outlet (15) connected to the exhaust air channel (5), and
- a supply air inlet (16) and a supply air outlet (13) connected to the supply air channel (6).

4. An air supply device according to claim 3,
**characterized in that** the internal part (9) comprises a first half (19) and a second half (20) arranged side by side in horizontal plane, wherein the first half (19) is connected to the supply air outlet (13) and the exhaust air inlet (14), and the second half (20) is connected to the supply air inlet (16) and the exhaust air outlet (15).

5. An air supply device according to any one of claims 1 to 4,
**characterized in that** the frame 10 comprises a cooker hood air inlet (17) connected to the cooker hood air channel (18).

6. An air supply device according claim 4 or claim 5, when depending on claim 4,
**characterized in that** the cooker hood air channel (18) is arranged between the first half (19) and the second half (20).

7. An air supply device according to any one of claims 2 to 6,
**characterized in that** the cooker hood channel (18) is connected to the exhaust air channel (5).

8. An air supply device according to any of claims 1 to 7,
c**haracterized** in that the cooker hood air channel (18) comprises removable lid (12) with a cooker hood air channel opening (24).

9. An air supply device according to claim 8,
**characterized in that** the removable lid (12) is arranged to be installed in the same position regardless the position of the internal part (9).

10. An air supply device according to claim 9,
**characterized in that** in the first position the cooker hood air inlet (17) is between the supply air inlet (16) and the supply air outlet (13), and in the second position the cooker hood air inlet (17) is between the exhaust air inlet (14) and the exhaust air outlet (15).

11. An air supply device according to any one of claims 2 to 10,
**characterized in that** the air supply device comprises at least one heat exchanger (21) arranged inside the exhaust air channel (5) or the supply air channel (6).

12. An air supply device according to any one of claim 2 to 10,
**characterized in that** the air supply device comprises heat exchangers (21) arranged inside the exhaust air channel (5) and the supply air channel (6).

13. An air supply device according to any of the preceding claims,
**characterized in that** the elastic material is expanded polypropylene (EPP).

14. An air supply device according to any of the preceding claims,
**characterized in that** a heat transfer unit (7) is arranged inside the lower part (4) of the body, and within the exhaust air channel (5) and the supply air channel (6) to transfer thermal energy between exhaust air flowing in the exhaust air channel (5), and supply air flowing in the supply air channel.

15. An air supply device according to claim 14, **characterized in that** the heat transfer unit (7) comprises a rotating heat transfer element (11).

## Patentansprüche

1. Luftversorgungsgerät (1) zum Extrahieren von Abluft aus einem Raum und zum Leiten von frischer Zuluft in den Raum, umfassend
- ein Gehäuse (2), das eine äußere Schicht des Luftversorgungsgeräts (1) bildet, und
- einen Körper aus elastischem Material, der innerhalb des Gehäuses (2) eingerichtet ist, wobei
- der Körper in mindestens einen oberen Teil (3) und einen unteren Teil (4) geteilt ist, die aufeinander eingerichtet sind,
- der obere Teil (3) einen inneren Teil (9) und einen Rahmen (10) umfasst, wobei der innere Teil (9) innerhalb des Rahmens (10) eingerichtet ist, und
- der innere Teil (9) dazu eingerichtet ist, innerhalb des Rahmens (10) in einer ersten Position oder in einer zweiten Position installiert zu werden, wobei in der zweiten Position der innere Teil (9) um 180° in einer horizontalen Ebene im Vergleich zu der ersten Position rotiert worden ist, der innere Teil (9) einen Dunstabzugshauben-Luftkanal (18) umfasst, der innerhalb des Rahmens (10) eingerichtet ist.

2. Luftversorgungsgerät gemäß Anspruch 1,
**dadurch gekennzeichnet, dass** das Luftversorgungsgerät (1) einen Abluftkanal (5) und einen Zuluftkanal (6) umfasst, die innerhalb des Gehäuses eingerichtet sind.

3. Luftversorgungsgerät gemäß Anspruch 2,
**dadurch gekennzeichnet, dass** der Rahmen (10) Folgendes umfasst
- einen Ablufteinlass (14) und einen Abluftauslass (15), die mit dem Abluftkanal (5) verbunden sind, und
- einen Zulufteinlass (16) und einen Zuluftauslass (13), die mit dem Zuluftkanal (6) verbunden sind.

4. Luftversorgungsgerät gemäß Anspruch 3,
**dadurch gekennzeichnet, dass** der innere Teil (9) eine erste Hälfte (19) und eine zweite Hälfte (20) umfasst, die Seite an Seite in einer horizontalen Ebene eingerichtet sind, wobei die erste Hälfte (19) mit dem Zuluftauslass (13) und dem Ablufteinlass (14) verbunden ist, und die zweite Hälfte (20) mit dem Zulufteinlass (16) und dem Abluftauslass (15) verbunden ist.

5. Luftversorgungsgerät gemäß einem der Ansprüche 1 bis 4,
**dadurch gekennzeichnet, dass** der Rahmen 10 einen Dunstabzugshauben-Lufteinlass (17) umfasst, der mit dem Dunstabzugshauben-Luftkanal (18) verbunden ist.

6. Luftversorgungsgerät gemäß Anspruch 4 oder Anspruch 5, wenn abhängig von Anspruch 4,
**dadurch gekennzeichnet, dass** der Dunstabzugshauben-Luftkanal (18) zwischen der ersten Hälfte (19) und der zweiten Hälfte (20) eingerichtet ist.

7. Luftversorgungsgerät gemäß einem der Ansprüche 2 bis 6,
**dadurch gekennzeichnet, dass** der Dunstabzugshauben-Luftkanal (18) mit dem Abluftkanal (5) verbunden ist.

8. Luftversorgungsgerät gemäß einem der Ansprüche 1 bis 7,
**dadurch gekennzeichnet, dass** der Dunstabzugshauben-Luftkanal (18) einen abnehmbaren Deckel (12) mit einer Dunstabzugshauben-Luftkanalöffnung (24) umfasst.

9. Luftversorgungsgerät gemäß Anspruch 8,
**dadurch gekennzeichnet, dass** der abnehmbare Deckel (12) dazu eingerichtet ist, in derselben Position installiert zu werden, ungeachtet der Position des inneren Teils (9).

10. Luftversorgungsgerät gemäß Anspruch 9,
**dadurch gekennzeichnet, dass** sich in der ersten Position der Dunstabzugshauben-Lufteinlass (17) zwischen dem Zulufteinlass (16) und dem Zuluftauslass (13) befindet und sich in der zweiten Position der Dunstabzugshauben-Lufteinlass (17) zwischen dem Ablufteinlass (14) und dem Abluftauslass (15) befindet.

11. Luftversorgungsgerät gemäß einem der Ansprüche 2 bis 10,
**dadurch gekennzeichnet, dass** das Luftversorgungsgerät mindestens einen Wärmetauscher (21) umfasst, der innerhalb des Abluftkanals (5) oder des Zuluftkanals (6) eingerichtet ist.

12. Luftversorgungsgerät gemäß einem der Ansprüche 2 bis 10,
**dadurch gekennzeichnet, dass** das Luftversorgungsgerät Wärmetauscher (21) umfasst, die innerhalb des Abluftkanals (5) und des Zuluftkanals (6) eingerichtet sind.

13. Luftversorgungsgerät gemäß einem der vorangehenden Ansprüche,
**dadurch gekennzeichnet, dass** das elastische Material expandiertes Polypropylen (EPP) ist.

14. Luftversorgungsgerät gemäß einem der vorangehenden Ansprüche,
**dadurch gekennzeichnet, dass** eine Wärmeübertragungseinheit (7) innerhalb des unteren Teils (4) des Körpers eingerichtet ist, und in dem Abluftkanal (5) und dem Zuluftkanal (6), um Wärmeenergie zwischen Abluft, die in dem Abluftkanal (5) strömt, und Zuluft, die in dem Zuluftkanal strömt, zu übertragen.

15. Luftversorgungsgerät gemäß Anspruch 14,
**dadurch gekennzeichnet, dass** die Wärmeübertragungseinheit (7) ein rotierendes Wärmeübertragungselement (11) umfasst.

## Revendications

1. Dispositif d'admission d'air (1) destiné à extraire l'air d'évacuation d'une pièce et à amener de l'air d'alimentation frais dans la pièce, comprenant
- un boîtier (2), formant une couche externe du dispositif d'admission d'air (1), et
- un corps, composé de matériau élastique, agencé à l'intérieur du boîtier (2), dans lequel
- le corps est divisé en au moins une partie supérieure (3) et une partie inférieure (4) qui sont agencées l'une au-dessus de l'autre,
- la partie supérieure (3) comprend une partie interne (9) et un cadre (10), dans lequel la partie interne (9) est agencée à l'intérieur du cadre (10), et
- la partie interne (9) est agencée pour être installée à l'intérieur du cadre (10) dans une première position ou dans une deuxième position, dans lequel, dans la deuxième position, la partie interne (9) a été tournée à 180° dans le plan horizontal comparé à la première position,
la partie interne (9) comprend un canal d'air de hotte (18) agencé à l'intérieur du cadre (10).

2. Dispositif d'admission d'air selon la revendication 1,
**caractérisé en ce que** le dispositif d'admission d'air (1) comprend un canal d'évacuation d'air (5) et un canal d'alimentation en air (6) agencés à l'intérieur du corps.

3. Dispositif d'admission d'air selon la revendication 2, **caractérisé en ce que** le cadre (10) comprend
- une entrée d'air d'évacuation (14) et une sortie d'air d'évacuation (15) reliées au canal d'évacuation d'air (5), et
- une entrée d'air d'alimentation (16) et une sortie d'air d'alimentation (13) reliées au canal d'alimentation en air (6).

4. Dispositif d'admission d'air selon la revendication 3,
**caractérisé en ce que** la partie interne (9) comprend une première moitié (19) et une deuxième moitié (20) agencées côte à côte dans le plan horizontal, dans lequel la première moitié (19) est reliée à la sortie d'air d'alimentation (13) et l'entrée d'air d'évacuation (14), et la deuxième moitié (20) est reliée à l'entrée d'air d'alimentation (16) et la sortie d'air d'évacuation (15).

5. Dispositif d'admission d'air selon l'une quelconque des revendications 1 à 4, **caractérisé en ce que** le cadre 10 comprend une entrée d'air de hotte (17) reliée au canal d'air de hotte (18).

6. Dispositif d'admission d'air selon la revendication 4 ou la revendication 5, lorsqu'elle est dépendante de la revendication 4,
**caractérisé en ce que** le canal d'air de hotte (18) est agencé entre la première moitié (19) et la deuxième moitié (20).

7. Dispositif d'admission d'air selon l'une quelconque des revendications 2 à 6, **caractérisé en ce que** le canal de hotte (18) est relié au canal d'évacuation d'air (5).

8. Dispositif d'admission d'air selon l'une quelconque des revendications 1 à 7, **caractérisé en ce que** le canal d'air de hotte (18) comprend un couvercle amovible (12) avec une ouverture de canal d'air de hotte (24).

9. Dispositif d'admission d'air selon la revendication 8,
**caractérisé en ce que** le couvercle amovible (12) est agencé pour être installé dans la même position quelle que soit la position de la partie interne (9).

10. Dispositif d'admission d'air selon la revendication 9,
**caractérisé en ce que**, dans la première position, l'entrée d'air de hotte (17) est entre l'entrée d'air d'alimentation (16) et la sortie d'air d'alimentation (13) et, dans la deuxième position, l'entrée d'air de hotte (17) est entre l'entrée d'air d'évacuation (14) et la sortie d'air d'évacuation (15).

11. Dispositif d'admission d'air selon l'une quelconque des revendications 2 à 10, **caractérisé en ce que** le dispositif d'admission d'air comprend au moins un échangeur de chaleur (21) agencé à l'intérieur du canal d'évacuation d'air (5) ou du canal d'alimentation en air (6).

12. Dispositif d'admission d'air selon l'une quelconque des revendications 2 à 10, **caractérisé en ce que** le dispositif d'admission d'air comprend des échangeurs de chaleur (21) agencés à l'intérieur du canal d'évacuation d'air (5) et du canal d'alimentation en air (6).

13. Dispositif d'admission d'air selon l'une quelconque des revendications précédentes,
**caractérisé en ce que** le matériau élastique est du polypropylène expansé (EPP).

14. Dispositif d'admission d'air selon l'une quelconque des revendications précédentes,
**caractérisé en ce qu'**une unité de transfert de chaleur (7) est agencée à l'intérieur de la partie inférieure (4) du corps, et à l'intérieur du canal d'évacuation d'air (5) et du canal d'alimentation en air (6) afin de transférer l'énergie thermique entre l'air d'évacuation circulant dans le canal d'évacuation d'air (5) et l'air d'alimentation circulant dans le canal d'alimentation en air.

15. Dispositif d'admission d'air selon la revendication 14,
**caractérisé en ce que** l'unité de transfert de chaleur (7) comprend un élément de transfert de chaleur rotatif (11).
